(19) Europäisches Patentamt
European Patent Office
Office européen des brevets

(11) EP 3 108 154 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.08.2024 Patentblatt 2024/35**

(45) Hinweis auf die Patenterteilung:
**05.05.2021 Patentblatt 2021/18**

(21) Anmeldenummer: **14733962.6**

(22) Anmeldetag: **19.05.2014**

(51) Internationale Patentklassifikation (IPC):
***F16H 3/72*** (2006.01) ***F03D 7/02*** (2006.01)
***F03D 15/00*** (2016.01)

(52) Gemeinsame Patentklassifikation (CPC):
**F16H 3/724; F03D 7/0276; F03D 15/00;**
F05B 2260/40311; Y02E 10/72

(86) Internationale Anmeldenummer:
**PCT/AT2014/000113**

(87) Internationale Veröffentlichungsnummer:
**WO 2014/183142 (20.11.2014 Gazette 2014/47)**

(54) **VERFAHREN ZUM BETREIBEN EINES TRIEBSTRANGES UND TRIEBSTRANG**

METHOD FOR OPERATING A DRIVE TRAIN, AND DRIVE TRAIN

PROCÉDÉ PERMETTANT DE FAIRE FONCTIONNER UNE CHAÎNE D'ENTRAÎNEMENT ET DE TRANSMISSION ET CHAÎNE D'ENTRAÎNEMENT ET DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2013 AT 4182013**

(43) Veröffentlichungstag der Anmeldung:
**28.12.2016 Patentblatt 2016/52**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**WO-A1-2010/101467** **WO-A2-2013/020148**
**DD-A1- 61 720** **DE-B- 1 138 720**
**US-A- 2 806 191** **US-A- 4 514 991**
**US-B2- 7 211 018**



Processed by Luminess, 75001 PARIS (FR)

## Beschreibung

Die Erfindung betrifft ein Verfahren zum Betreiben eines Triebstranges mit einer Antriebswelle, einer mit einem Stromnetz verbundenen, motorisch und generatorisch betreibbaren, elektrischen Antriebsmaschine und mit einem Differenzialgetriebemit drei An- bzw. Abtrieben, wobei ein Abtrieb mit der Antriebswelle ein Antrieb mit der Antriebsmaschine und ein zweiter Antrieb mit einem Differenzialantrieb verbunden ist.

Die Erfindung betrifft des Weiteren einen Triebstrang mit einer Antriebswelle, einer mit einem Stromnetz verbundenen, motorisch und generatorisch betreibbaren, elektrischen Antriebsmaschine und mit einem Differenzialgetriebe mit drei An- bzw. Abtrieben, wobei ein Abtrieb mit der Antriebswelle, ein Antrieb mit der Antriebsmaschine und ein zweiter Antrieb mit einem elektrischen Differenzialantrieb verbunden ist

WO 2010/101467 A (siehe Fig. 3) offenbart einen Triebstrang für ein Fahrzeug, mit einem Differenzial und zwei elektrischen Maschinen, die wahlweise motorisch oder generatorisch betrieben werden können.

Ein allgemeines Problem von Arbeitsmaschinen, wie Fördereinrichtungen, z.B. Pumpen, Kompressoren und Ventilatoren, oder wie Mühlen, Brecher, Fahrzeuge usw., ist ein effizienter drehzahlvariabler Betrieb. Im Weiteren werden elektrische Maschinen als Beispiel für Antriebsmaschinen herangezogen, das Prinzip gilt aber für alle möglichen Arten von Antriebsmaschinen so wie z.B. für Verbrennungskraftmaschinen. Die am häufigsten verwendeten elektrischen Antriebe sind heutzutage Drehstrommaschinen wie z.B. Asynchronmotoren und Synchronmotoren.

Der Erfindung liegt die Aufgabe zu Grunde, ein Verfahren und eine Vorrichtung der eingangs genannten Art anzugeben, bei denen bei einfachem Aufbau eine Änderung der Fördermenge der Fördereinrichtung möglich ist.

Gelöst wird diese Aufgabe bei einem Verfahren mit den Merkmalen des Anspruchs 1.

Gelöst wird diese Aufgabe des Weiteren mit einem Triebstrang mit den Merkmalen des Anspruchs 7.

Der Kern eines Differenzialsystems ist ein Differenzialgetriebe, das in einer einfachen Ausführung eine einfache Planetengetriebestufe mit drei An- bzw. Abtrieben ist, wobei ein Abtrieb mit der Antriebswelle einer Arbeitsmaschine, ein erster Antrieb mit der Antriebsmaschine und ein zweiter Antrieb mit einem Differenzialantrieb verbunden ist. Damit kann die Arbeitsmaschine bei konstanter Drehzahl der Antriebsmaschine drehzahlvariabel betrieben werden, indem der Differenzialantrieb die Drehzahldifferenz ausgleicht.

Mit dem Differentialantrieb kann die von der Arbeitsmaschine geförderte Menge erhöht werden, indem die konstante Leistung der Antriebsmaschine durch die variable Leistung des Differenzialantriebs erhöht wird.

Wenn der üblicherweise für einen elektrischen Differenzialantrieb verwendete Wechselrichter durch einen Gleichrichter ersetzt wird, ist dies vorteilhaft, da dieser meist einen höheren Wirkungsgrad als ein Wechselrichter aufweist und ist auch wesentlich robuster und kostengünstiger ist.

Die Erfindung kann beispielsweise bei Speicherkraftwerken Verwendung finden.

Nachfolgend werden bevorzugte Ausführungsformen der Erfindung mit Bezug auf die angeschlossenen Zeichnungen erläutert. Es zeigt:

Fig. 1 das Prinzip eines nicht erfindungsgemäßen Differenzialsystems für einen Antrieb einer Pumpe,

Fig. 2 eine weitere Ausführungsform eines Differenzialsystems,

Fig. 3 eine weitere Ausführungsform eines Differenzialsystems mit einer Getriebevorstufe,

Fig. 4 die Drehzahl- und Leistungsparameter eines nicht erfindungsgemäßen Differenzialsystems einer Pumpe,

Fig. 5 eine weitere Ausführungsform eines Differenzialsystems mit einem vereinfachten Differenzialantrieb,

Fig. 6 die sich aus Fig. 5 ergebenden Drehzahl- und Leistungsparameter,

Fig. 7 eine weitere Ausführungsform eines Differenzialsystems mit einer Getriebeschaltstufe,

Fig. 8 die sich aus Fig. 7 ergebenden Drehzahl- und Leistungsparameter,

Fig. 9 eine weitere Ausführungsform eines Differenzialsystems mit reduziertem Drehzahlbereich,

Fig. 10 die sich aus Fig. 9 ergebenden Drehzahl- und Leistungsparameter, und

Fig. 11 ein Regelsystem zum Dämpfen von Triebstrangschwingungen.

Trotz hoher elektrischer Leistungsaufnahme sind Drehstrommaschinen bei Stillstand nicht im Stande diese Leistung vollständig mechanisch abzugeben, was sich in hohen Verlusten und einem geringen Anfahrmoment wiederspiegelt. Gleichzeitig entspricht die Stromaufnahme einer Drehstrommaschine beim Start von Drehzahl Null aus typischerweise dem ca. 7-fachen Nennstrom, was beim Anfahren eine entsprechend hohe elektrische Last für das Netz verursacht.

Es muss daher eine Drehstrommaschine entsprechend groß ausgelegt werden, damit sie vom Stillstand an ein dem Nenndrehmoment entsprechendes Antriebsmoment liefern kann, und ist deswegen oft überdimensioniert. Elektrische Maschinen werden daher auch aus diesem Grund, anstatt direkt an ein Netz angeschlossen zu werden, häufig in Kombination mit einem Frequenzumrichter als drehzahlvariabler Antrieb ausgeführt. Damit kann man zwar ein Anfahren mit hohem Drehmoment von Drehzahl Null realisieren ohne das Netz zu belasten, die Lösung ist jedoch teuer und mit wesentlichen Wirkungsgradeinbußen verbunden. Eine im Vergleich dazu kostengünstigere und auch bezüglich Wirkungsgrad bessere Alternative ist der Einsatz von Differenzialsystemen - beispielsweise gemäß AT 507 394. Grundsätzliche Einschränkung hierbei ist jedoch, dass abhängig vom Übersetzungsverhältnis der Differenzialstufe nur ein relativ kleiner Drehzahlbereich bzw. im sogenannten Differenzialmode praktisch keine niedrigen Drehzahlen an der Antriebswelle einer Arbeitsmaschine erreicht werden können.

Um dies zu realisieren gibt es verschiedene Möglichkeiten. Gemäß Deutschem Gebrauchsmuster Nr. 20 2012 101 708.3 beispielsweise kann man das Übersetzungsverhältnis des Differenzialgetriebes auf 1 festlegen. Auf dieser Basis kann man mit dem Differenzialantrieb den kompletten Triebstrang antreiben bzw. die Antriebsmaschine auf Synchrondrehzahl bringen und diese in weiterer Folge mit dem Netz synchronisieren.

Nachteil dieser Lösung ist, dass der Differenzialantrieb bzw. dessen Frequenzumrichter wesentlich kleiner dimensioniert ist als die Antriebsmaschine und daher auch nur ein entsprechend kleines Drehmoment liefern kann.

Um eine Antriebsmaschine unter Last entweder mit dem Netz zu synchronisieren (wie z.B. direkt an das Netz gekoppelte elektrische Maschinen) oder in einen Drehzahlbereich mit hohem zur Verfügung stehenden Drehmoment (wie z.B. bei Verbrennungskraftmaschinen) beschleunigen und zusätzlich die Arbeitsmaschine mit maximalem bzw. Auslegungs-Drehmoment des Triebstranges von Drehzahl Null weg anfahren zu können und vorzugsweise auf Synchrondrehzahl zu bringen, kann das Anlaufen z.B. wie folgt in 3 Phasen stattfinden:

Phase 1: Die Antriebsmaschine wird vorzugsweise mit sogenannter Stern/Dreieck-Schaltung ans Netz geschaltet oder alternativ (in einer besonders netzschonenden Methode) zuerst mit einer zusätzlichen Einrichtung auf (zumindest näherungsweise) Synchrondrehzahl gebracht und dann mit dem Netz synchronisiert. Im Falle einer Verbrennungskraftmaschine wird diese einfach gestartet und anschließend hochgefahren. Dabei bleibt die Antriebsmaschine während des Anfahrens, abgesehen von den zu überwindenden massenträgheitsmomentbedingten Reaktionskräften vom zweiten Antrieb des Differenzialgetriebes, weitgehend frei von äußeren mechanischen Lasten. Im Umkehrschluss bedeutet dies, dass, bis die Antriebsmaschine ihre Nenndrehzahl erreicht hat, auf die Antriebswelle der Arbeitsmaschine ein entsprechend kleines antreibendes Drehmoment wirkt.

Phase 2: Da jetzt das volle Drehmoment der Antriebsmaschine zur Verfügung steht, beginnt in der zweiten Phase das eigentliche Beschleunigen und Anfahren der Arbeitsmaschine unter Last, indem der zweite Antrieb der Differenzialgetriebestufe mittels einer Synchronisationsbremse verzögert wird.

Phase 3: Sobald die Antriebswelle des zweiten Antriebs des Differenzialsystems im Regeldrehzahlbereich des Differenzialantriebs ist, übernimmt dieser die Drehzahlregelung des Triebstrangs und die Synchronisationsbremse wird gelöst.

Fig. 1 zeigt das Prinzip eines nicht erfindungsgemäßen Differenzialsystems für einen Triebstrang am Beispiel einer Pumpe. Dabei ist die Arbeitsmaschine 1 der Rotor einer Pumpe, welcher über eine Antriebswelle 2 und ein Differenzialgetriebe 3 von einer Antriebsmaschine 4 angetrieben wird. Die Antriebsmaschine 4 ist vorzugsweise eine Mittelspannungs-Drehstrommaschine, welche an ein Netz 12, welches im gezeigten Beispiel aufgrund einer Mittelspannungs-Drehstrommaschine ein Mittelspannungsnetz ist, angeschlossen wird. Das gewählte Spannungsniveau hängt jedoch vom Einsatzfall und v.a. dem Leistungsniveau der Antriebsmaschine 4 ab und kann ohne Einfluss auf die Grundfunktion des erfindungsgemäßen Systems, jedes gewünschte Spannungsniveau haben. Entsprechend der Polpaarzahl der Antriebsmaschine 4 ergibt sich ein bauartspezifischer Betriebsdrehzahlbereich. Der Betriebsdrehzahlbereich ist dabei jener Drehzahlbereich, in dem die Antriebsmaschine 4 ein definiertes bzw. gewünschtes bzw. erforderliches Drehmoment liefern bzw. im Falle einer elektrischen Antriebsmaschine mit dem Netz 12 synchronisiert werden kann. Ein Planetenträger 7 ist mit der Antriebswelle 2 verbunden, eine Antriebsmaschine 4 mit einem Hohlrad 8 und ein Sonnenrad 9 des Differenzialgetriebes 3 mit dem Differenzialantrieb 5. Der Kern des Differenzialsystems ist in dieser Ausführungsform somit eine einfache Planetengetriebestufe mit drei An- bzw. Abtrieben, wobei ein Abtrieb mit der Antriebswelle 2 der Arbeitsmaschine 1, ein erster Antrieb mit der Antriebsmaschine 4 und ein zweiter Antrieb mit dem Differenzialantrieb 5 verbunden ist. Um den Drehzahlbereich des Differenzialantriebs 5 optimal anpassen zu können, wird ein Anpassungsgetriebe 10 zwischen dem Sonnenrad 9 und dem Differenzialantrieb 5 implementiert.

Alternativ zur gezeigten Stirnradstufe kann das Anpassungsgetriebe 10 beispielsweise auch mehrstufig sein bzw. als Zahnriemen oder Kettentrieb ausgeführt werden. Mit dem Anpassungsgetriebe 10 kann man darüber hinaus einen Achsversatz für den Differenzialantrieb 5 realisieren, der aufgrund der koaxialen Anordnung der Arbeitsmaschine 1 und der Antriebsmaschine 4 eine einfache Ausführung des Differenzialantriebes 5 ermöglicht. Mit dem Differenzialantrieb 5 ist eine Motorbremse 13 verbunden, welche den Differenzialantrieb 5 bei Bedarf bremst. Elektrisch ist der Differenzialantrieb 5 mittels eines vorzugsweise Niederspannungs-Frequenzumrichters, bestehend aus einem motorseitigen Wechselrichter 6a und einem netzseitigen Wechselrichter 6b, und einem Transformator 11 an das Netz 12 angebunden. Der Transformator gleicht allfällige vorhandene Spannungsdifferenzen zwischen dem Netz 12 und dem netzseitigen Wechselrichter 6b aus und kann bei Spannungsgleichheit zwischen der Antriebsmaschine 4, dem netzseitigen Wechselrichter 6b und dem Netz 12 entfallen. Die Wechselrichter 6a und 6b sind durch einen Gleichstromzwischenkreis verbunden und können bei Bedarf örtlich getrennt sein, wobei vorzugsweise der motorseitige Wechselrichter 6a so nah wie möglich beim Differenzialantrieb 5 positioniert ist. Wesentlicher Vorteil dieses Konzeptes ist, dass die Antriebsmaschine 4 direkt, das heißt ohne aufwändige Leistungselektronik, an ein Netz 12 angebunden werden kann. Der Ausgleich zwischen variabler Rotordrehzahl und fixer Drehzahl der netzgebundenen Antriebsmaschine 4 wird durch den drehzahlvariablen Differenzialantrieb 5 realisiert.

Die Drehmomentgleichung für das Differenzialsystem lautet:

$$\text{Drehmoment}_{\text{Differenzialantrieb}} = \text{Drehmoment}_{\text{Antriebswelle}} * y / x,$$

wobei der Größenfaktor y/x ein Maß für die Übersetzungsverhältnisse im Differenzialgetriebe 3 und im Anpassungsgetriebe 10 ist. Die Leistung des Differenzialantriebs 5 ist im Wesentlichen proportional dem Produkt aus prozentueller Abweichung der Pumpendrehzahl von deren Grunddrehzahl x Antriebswellenleistung. Dementsprechend erfordert ein großer Drehzahlbereich grundsätzlich eine entsprechend große Dimensionierung des Differenzialantriebs 5. Darin ist auch der Grund zu sehen, warum Differenzialsysteme für kleine Drehzahlbereiche besonders gut geeignet sind, wobei aber grundsätzlich jeder Drehzahlbereich realisierbar ist.

Ein Differenzialantrieb 5 für eine Pumpe als Arbeitsmaschine 1 hat beispielsweise eine Leistung von rund 15% der System-Gesamtleistung. Das wiederum bedeutet, dass mit dem Differenzialsystem keine niedrigen Drehzahlen an der Arbeitsmaschine 1 realisiert werden können. Muss die Arbeitsmaschine 1 von Drehzahl Null mit hohem Drehmoment in ihren Arbeitsdrehzahlbereich (dies ist der Drehzahlbereich, in dem die Arbeitsmaschine 1 im Wesentlichen arbeitet) gebracht werden, so kann dies nur realisiert werden, indem der Differenzialantrieb 5 eingebremst (entweder elektrisch oder mittels Motorbremse 13) und die Antriebsmaschine 4 an das Netz geschaltet wird. Die Arbeitsmaschine 4 wiederum kann aus dem Stand das Nenndrehmoment nur schwer aufbringen, bzw. zieht sie einen bis zu 7-fachen Nennstrom, um annähernd auf Synchrondrehzahl zu beschleunigen.

Durch Einsatz einer sogenannten Stern/Dreieck-Schaltung kann man zwar den Anfahrstrom reduzieren, reduziert damit jedoch auch das realisierbare Anfahrmoment.

Eine Verbesserung erzielt man z. B., indem der Differenzialantrieb 5 zu Beginn des Anfahrens auf seine maximal mögliche Betriebsdrehzahl gebracht wird. Aufgrund äußerer Lasten verbleibt währenddessen die Arbeitsmaschine 1 in einem Bereich kleiner Drehzahl. Dadurch wird die Antriebsmaschine 4 auf eine Drehzahl gebracht, welche sich abhängig von der Drehzahl der Arbeitsmaschine 1 einerseits und dem Übersetzungsverhältnis des Differenzialgetriebes 3 und eines evtl. vorhandenen Anpassungsgetriebes 10 andererseits zwangsläufig einstellt. Anschließend wird der Differenzialantrieb 5 so geregelt, dass seine Drehzahl innerhalb seines Regeldrehzahlbereichs bleibt, während die Antriebsmaschine 4 mit oder ohne sogenannte Stern/Dreieck-Schaltung ans Netz 12 geschaltet wird. Die Drehzahlregelung bzw. Bremsung des Differenzialantriebes 5 erfolgt dabei vorzugsweise elektrisch durch den Wechselrichter 6a, 6b, oder mittels Motorbremse 13.

Die Motorbremse 13 kann auch dazu verwendet werden, den Differenzialantrieb 5 vor Überdrehzahlen zu schützen, wenn z. B. die Antriebsmaschine 4 ausfällt und die Arbeitsmaschine 1 anhält oder in die Gegenrichtung dreht.

Fig. 2 zeigt eine weitere Ausführungsform eines Differenzialsystems. Der gezeigte Triebstrang weist auch hier wie in Fig. 1 eine Arbeitsmaschine 1, eine Antriebswelle 2, ein Differenzialgetriebe 3, eine Antriebsmaschine 4 und eine Differenzialantrieb 5 auf, welcher mittels eines Frequenzumrichter 6 (bestehend aus motorseitigem und netzseitigen Wechselrichter - hier als Einheit vereinfacht dargestellt) und eines Transformators 11 an das Netz 12 angeschlossen ist. Auch hier wird der Differenzialantrieb 5 mittels eines Anpassungsgetriebes 10 an das Differenzialgetriebe 3 angebunden. Zusätzlich wird jedoch zwischen dem Anpassungsgetriebe 10 und dem Differenzialgetriebe 3 eine Kupplung 15 implementiert.

Eine Synchronisationsbremse 14 wirkt auf das Sonnenrad 9 und damit auf den gesamten Triebstrang. Beim Anfahren werden in einem ersten Schritt der Differenzialantrieb 5 und das Anpassungsgetriebe 10 durch die Kupplung 15 vom Rest des Triebstranges entkoppelt. Wird nun die Antriebsmaschine 4 hochgefahren und mit dem Netz verbunden, so dreht das Sonnenrad 9 frei mit und es kann sich im gesamten Triebstrang kein nennenswertes Drehmoment aufbauen. Somit verbleibt auch in diesem Fall die Arbeitsmaschine 1 in einem Bereich kleiner Drehzahl und die Antriebsmaschine 4 kann ohne nennenswertes äußeres Gegenmoment mit dem Netz 12 synchronisiert werden.

Um den oben beschriebenen Effekt des hohen Anfahrstromes beim Synchronisieren der Antriebsmaschine 4 zu vermeiden, kann entweder eine Stern/Dreieck-Schaltung implementiert oder die Antriebsmaschine 4 durch eine Hilfseinrichtung - z.B. einen kleinen drehzahlvariablen Antrieb - auf (annähernd) Synchrondrehzahl gebracht und anschließend mit dem Netz 12 synchronisiert werden. Alternativ kann bei geschlossener Kupplung 15 - wie schon zu Fig. 1 beschrieben - die Antriebsmaschine 4 mit dem Differenzialantrieb 5 auf Drehzahl gebracht werden. Dabei kann die Antriebsmaschine 4 zwar nicht bis zu ihrer Synchrondrehzahl beschleunigt werden, zumindest ist jedoch der sich einstellende Anfahrstrom kleiner. Die Kupplung 15 wird dann wieder geöffnet.

Sobald die Antriebsmaschine 4 über eine gewisse Drehzahl beschleunigt wurde und die Arbeitsmaschine 1 sich währenddessen nur langsam dreht, stellt sich am Sonnenrad 9 eine entsprechend dem Übersetzungsverhältnis des Differenzialgetriebes 3 hohe Drehzahl ein, welche (unter Berücksichtigung des Anpassungsgetriebes 10) über dem erlaubten Regeldrehzahlbereich für den Differenzialantrieb 5 liegt. Der Regeldrehzahlbereich ist der Drehzahlbereich, in dem der Differenzialantrieb 5 arbeitet um den Arbeitsdrehzahlbereich der Arbeitsmaschine 1 realisieren zu können. Der Regeldrehzahlbereich wird dabei v.a. durch die vom Hersteller spezifizierten Spannungs-, Strom- und Drehzahlgrenzen bestimmt. In dieser Phase kann der Differenzialantrieb 5 nicht mit dem Netz 12 verbunden sein. In einem weiteren Schritt wird daher mit der Synchronisationsbremse 14 der mit dem Sonnenrad 9 verbundene zweite Antrieb des Differenzialgetriebes 3 auf eine Drehzahl verzögert, welche im Regeldrehzahlbereich des Differenzialantriebs 5 liegt. In weiterer Folge wird der differenzialantriebseitige Teil der Kupplung 15 (vorzugsweise mittels Differenzialantrieb 5) vorzugsweise mit der Drehzahl des zweiten Antriebs des Differenzialgetriebes 3 synchronisiert und anschließend die Kupplung 15 geschlossen. Die Kupplung 15 ist vorzugsweise eine formschlüssige Klauenkupplung oder eine kraftschlüssige Lamellenkupplung. Ein Vorteil der kraftschlüssigen Lamellenkupplung ist, dass, wenn dafür ausgelegt, keine Synchronisation der beiden Kupplungshälften notwendig ist.

Durch Betätigung der Synchronisationsbremse 14 wird zwangsläufig die Antriebswelle 2 beschleunigt, wobei das dazu zur Verfügung stehende Drehmoment durch das Minimum aus der auf die Antriebswelle 2 wirkenden Bremskraft der Synchronisationsbremse 14 einerseits und dem Kippmoment der Antriebsmaschine 4 andererseits bestimmt wird. D.h. im Gegensatz zu den Anfahroptionen gemäß Stand der Technik kann hier das mehrfache Nenndrehmoment als Anfahrmoment von Drehzahl Null weg realisiert werden, da das typische Kippmoment einer Drehstrommaschine bei ca. 2 bis 3-fachem ihres Nenndrehmomentes liegt. Grundsätzlich kann diese Anfahrmethode auch bei z.B. Verbrennungskraftmaschinen eingesetzt werden, was mitunter erforderlich ist, weil diese im Teildrehzahlbereich nur ein Drehmoment erzeugen können, welches wesentlich geringer als ihr Nenndrehmoment ist.

Als Synchronisationsbremse 14 wird beispielweise eine Scheibenbremse (= mechanische Bremse) eingesetzt, womit diese auch als Betriebs- und Sicherheitsbremse für den Differenzialantrieb 5 dienen kann. Damit kann die Synchronisationsbremse 14 grundsätzlich auch die Funktion der in Fig. 1 dargestellten Motorbremse 13 erfüllen.

Alternativ kann jedoch jede Art von Bremse eingesetzt werden. Insbesondere bieten sich hier sogenannte Retarder an. Hier ist zunächst einmal die Gruppe der hydrodynamischen Retarder (= hydraulische Bremse) zu nennen. Hydrodynamische Retarder arbeiten meist mit Öl oder Wasser, das bei Bedarf in ein Wandlergehäuse geleitet wird. Das Wandlergehäuse besteht aus zwei rotationssymmetrischen und sich gegenüberliegenden Schaufelrädern, und zuvor einem Rotor, der mit dem Triebstrang der Anlage verbunden ist, und einem feststehenden Stator. Der Rotor beschleunigt das zugeführte Öl und die Zentrifugalkraft drückt es nach außen. Durch die Form der Rotorschaufeln wird das Öl in den Stator geleitet, der dadurch ein bremsendes Drehmoment im Rotor induziert und in weiterer Folge dann auch den gesamten Triebstrang bremst. Bei einem elektrodynamischen Retarder (= elektrische Bremse), z.B. einer Wirbelstrombremse, sind z.B. zwei Stahlscheiben (Rotoren), die nicht magnetisiert sind, mit dem Antriebsstrang verbunden. Dazwischen liegt der Stator mit elektrischen Spulen. Wenn durch Aktivierung des Retarders Strom eingesteuert wird, werden Magnetfelder erzeugt, die durch die Rotoren geschlossen werden. Die gegenläufigen Magnetfelder erzeugen dann die Bremswirkung. Die entstandene Wärme wird z.B. durch innenbelüftete Rotorscheiben wieder abgegeben.

Ein wesentlicher Vorteil eines Retarders als Betriebsbremse ist dessen Verschleißfreiheit und gute Regelbarkeit.

Das System kann auch dazu verwendet werden, die Antriebsmaschine 4 im Phasenschiebebetrieb zu betreiben. D. h., dass die Antriebsmaschine 4 Blindstrom ins das bzw. aus dem Netz 12 liefern bzw. beziehen kann, ohne dass die Arbeitsmaschine 1 betrieben wird. Dies gilt insbesondere für Energiegewinnungsanlagen.

Fig. 3 zeigt eine weitere Ausführungsform eines Differenzialsystems mit einer Getriebevorstufe 16. Durch diese Getriebevorstufe 16 kann der Drehzahlbereich für die Antriebswelle 2 bzw. für die Arbeitsmaschine 1 entsprechend dem Übersetzungsverhältnisses der Getriebevorstufe 16 angepasst werden. Der Einsatz einer Getriebevorstufe 16 ist dann notwendig bzw. von Vorteil, wenn das aufgrund der technischen Parameter einer z.B. kostengünstigen Antriebsmaschine 4 und eines effizienten Differenzialsystems resultierende Drehzahlniveau nicht dem geforderten Arbeitsdrehzahlbereich einer Arbeitsmaschine 1 entspricht. Ein sich dadurch ergebender Vorteil ist, dass, sofern die Getriebevorstufe 16 wie dargestellt eine Stirnradstufe ist, der Differenzialantrieb 5 ohne einem Anpassungsgetriebe 10 gemäß Fig. 1 und 2 koaxial zur Antriebsmaschine 4 auf der antriebsmaschinenabgewandten Seite des Differenzialgetriebes 3 positioniert werden kann. Um ein dadurch evtl. erforderliches höheres Übersetzungsverhältnis im Differenzialgetriebe 3 zu erreichen, bietet sich an, anstelle einfacher Planeten, sogenannte Stufenplaneten einzusetzen. Diese Stufenplaneten bestehen jeweils aus zwei drehfest verbunden Zahnrädern mit unterschiedlichem Durchmesser und vorzugsweise unterschiedlicher Verzahnungsgeometrie. Das Hohlrad 8 ist dann mit dem im Durchmesser kleineren Zahnrad des Stufenplaneten im Eingriff, und das Sonnenrad 9 mit dem zweiten Zahnrad des Stufenplaneten. Die Verbindungswelle 26 zwischen dem Differenzialgetriebe 3 und dem Differenzialantrieb 5 ist vorzugsweise eine elektrisch nicht leitende Faserverbundwelle. Ist die Verbindungswelle 26 eine elektrisch leitende Welle, dann ist vorzugsweise ein isolierendes Element zwischen dem Differenzialgetriebe 3 (bzw. falls vorhanden der Anpassungsgetriebe 10) und dem Differenzialantrieb 5 einzubauen, um unerwünschte elektrische Ströme vom Differenzialgetriebe 3 fernzuhalten.

Damit besteht das Differenzialsystem aus einer kleinstmöglichen Anzahl von Bauteilen und hat darüber hinaus einen optimalen Gesamtwirkungsgrad. Die Motorbremse 13 erfüllt in der gezeigten Konfiguration auch die Funktion der Synchronisationsbremse 14 aus Fig. 2. Nachteil dieser Ausführungsform im Vergleich zu der gemäß Fig. 2 ist, dass der Differenzialantrieb 5 für den Anfahrvorgang für eine höhere Drehzahl ausgelegt werden muss, wobei der Differenzialantrieb 5 bei Drehzahlen über dem Regeldrehzahlbereich vorzugsweise vom Netz getrennt ist. Damit müssen Drehzahlen außerhalb des Regeldrehzahlbereiches nur mechanisch ertragen werden. Erschwerend kommt hinzu, dass das Übersetzungsverhältnis des Differenzialgetriebes 3 höher sein muss als für die Lösung gemäß Fig. 2, weil hier das Anpassungsgetriebe 10 fehlt. Grundsätzlich ist jedoch auch für die Variante gem. Fig. 3 der zusätzliche Einsatz eines Anpassungsgetriebes 10 möglich, wodurch das Übersetzungsverhältnis des Differenzialgetriebes 3 kleiner werden kann. Darüber hinaus kann auch eine Kupplung 15 und eine Synchronisationsbremse 14 zwischen dem zweiten Antrieb des Differenzialgetriebes 3 bzw. Sonnenrad 9 und dem Differenzialantrieb 5 implementiert werden.

Ein weiterer Vorteil dieser Ausführungsform mit Getriebevorstufe 16 ist, dass auf einfache Weise eine koaxiale Hohlwelle 27 zur Arbeitsmaschine 1 realisiert werden kann. Mittels dieser Hohlwelle 27 kann die sich drehende Arbeitsmaschine 1 auf einfache Weise elektrisch oder hydraulisch versorgt werden. Dabei wird vorzugsweise eine Drehübertragung 28 zur an der arbeitsmaschinenabgewandten Seite der Getriebevorstufe appliziert. Prinzipiell kann auch ein mechanisches Gestänge in der Durchführung 27 geführt werden und damit durch translatorische oder drehende Bewegung z.B. die Schaufeln eines Pumpenrotors mechanisch verstellt werden.

Sind das Differenzialsystem und die Getriebevorstufe 16 als sogenannte "standalone"-Variante vorgesehen, so werden die Antriebswelle 2 und die Antriebsmaschine 4 vorzugsweise mittels einer Kupplung 17, 18 angeschlossen.

Fig. 4 zeigt die Drehzahl- und Leistungsparameter eines nicht erfindungsgemäßen Differenzialsystems, beispielsweise für eine Pumpe. Die Darstellung zeigt Leistungs- und Drehzahlwerte für eine Pumpe als Arbeitsmaschine 1, eine Antriebsmaschine 4 und einen Differenzialantrieb 5 jeweils aufgetragen über den Drehzahlwerten der Antriebswelle 2 ("Pumpendrehzahl"). Die Antriebsmaschine 4 ist mit dem Netz 12 verbunden und damit ist ihre Drehzahl ("Motordrehzahl") konstant - in dem gezeigten Beispiel ca. 1.500 1/min für eine vierpolige Drehstrommaschine in einem 50 Hz-Netz. Der Arbeitsdrehzahlbereich für die Antriebswelle 2 geht von 68 % bis 100 %, wobei bei 100 % der gewählte Nenn- bzw. Maximalpunkt ist. Entsprechend dem Übersetzungsverhältnis des Differenzialsystems geht die Drehzahl des Differenzialantriebes 5 ("Servodrehzahl") von -2.000 1/min bis 1.500 1/min. Dies bedeutet, dass der Differenzialantrieb 5 generatorisch (-) und motorisch (+) betrieben wird. Da die maximal erforderliche Leistung des Differenzialantriebes 5 im generatorischen (-) Bereich (ca. 110kW) geringer als die im motorischen (+) Bereich (ca. 160kW) ist, kann der Differenzialantrieb 5 im generatorischen (-) Bereich im sogenannten Feldschwächebereich betrieben werden, womit für den Differenzialantrieb 5 eine höhere Drehzahl - jedoch mit reduziertem Drehmoment - realisierbar ist. Damit kann auf einfache Weise der Drehzahlbereich für die Arbeitsmaschine 1 erweitert werden.

Eine weitere Möglichkeit, den Drehzahlbereich für die Arbeitsmaschine 1 zu erweitern, bietet die sogenannte 87Hz-Kennlinie für den Betrieb des Frequenzumrichters 6. Das Prinzip ist dabei folgendes: Motoren kann man typischerweise in Stern (400V) oder Dreieck (230V) betreiben. Betreibt man einen Motor wie üblich mit 400V in Sternschaltung, dann erreicht man bei 50 Hz den Nennpunkt. Diese Kennlinie wird im Frequenzumrichter eingestellt. Man kann einen Motor aber auch mit 400V in Dreieckschaltung betreiben und den Frequenzumrichter so parametrieren, dass er bei 230V die 50Hz erreicht. Dadurch erreicht der Frequenzumrichter seine Nennspannung (400V) erst bei 87Hz ($\sqrt{3}$ x 50Hz). Da das Motordrehmoment bis zum Nennpunkt konstant ist, erreicht man mit der 87Hz-Kennlinie eine höhere Leistung. Zu beachten ist dabei jedoch, dass man im Vergleich zur Sternschaltung bei der Dreieckschaltung einen um $\sqrt{3}$ höheren Strom hat. D.h. der Frequenzumrichter muss stärker dimensioniert sein. Darüber hinaus entstehen im Motor durch die höhere Frequenz auch höhere Verluste, für die der Motor thermisch ausgelegt sein muss. Letztendlich erreicht man jedoch mit der 87Hz-Kennlinie einen entsprechend ($\sqrt{3}$) größeren Drehzahlbereich mit - im Gegensatz zur Feldschwächung - nicht reduziertem Drehmoment.

Der Punkt "T" in Fig. 4 markiert die sogenannte "Grunddrehzahl" der Antriebswelle 2, bei der die Drehzahl des Differenzialantriebes 5 gleich Null ist. Idealerweise wird dieser Punkt "T" in einen Arbeitsbereich gelegt, in dem die Anlage über große Zeitanteile betrieben wird. In diesem Betriebspunkt kann die Motorbremse 13 aktiviert werden, womit der Differenzialantrieb 5 nicht betrieben werden muss und in weiterer Folge damit zusammenhängende Verluste und Verschleiß vermieden werden. Im motorischen (+) Bereich des Kennfeldes wird der Antrieb parallel von der Antriebsmaschine 4 und dem Differenzialantrieb 5 angetrieben. Die Summe beider Leistungen ist die Antriebsleistung für die Antriebswelle 2 ("Systemleistung") - abzüglich anfallender Systemverluste. Im generatorischen (-) Bereich muss die Antriebsmaschine 4 die Leistung des Differenzialantriebes 5 ("Servoleistung") kompensieren, wodurch die Systemgesamtleistung ("Systemleistung") die Antriebsleistung der Antriebsmaschine 4 ("Motorleistung") abzüglich der Leistung des Differenzialantriebes 5 ist. D.h., dass wirkungsgradmäßig der motorische (+) Bereich besser ist. Dies passt sehr gut zur dargestellten beispielhaften Häufigkeitsverteilung ("Wahrscheinlichkeit") der Lastverteilung im Dauerbetrieb der Anlage, welche einen Großteil der Betriebsdauer im motorischen (+) Bereich zeigt. Betriebsbedingt ist jedoch auch ein Betrieb bei kleineren Pumpendrehzahlen erforderlich, wobei hier die anteilige Verweildauer mit abnehmender Pumpendrehzahl stark abnimmt.

Grundsätzlich ist festzustellen, dass je näher die Pumpendrehzahl ("Pumpendrehzahl") bei der Grunddrehzahl "T" liegt, desto kleiner ist der Leistungsfluss über den Differenzialantrieb 5 und somit ist auch der Systemgesamtwirkungsgrad sehr hoch. Da mit zunehmender Pumpendrehzahl auch die erforderliche Antriebsleistung steigt, kann jedoch im Vergleich zu einem Antrieb gemäß Stand der Technik durch den parallelen Antrieb der Antriebsmaschine 4 und des Differenzialantrieb 5 die erforderliche Größe der Antriebsmaschine 4 um die Größe des Differenzialantriebes 5 reduziert werden.

Wie schon eingangs erwähnt kann gemäß deutschem Gebrauchsmuster Nr. 20 2012 101 708.3 mit Hilfe einer Differenzialsperre das Übersetzungsverhältnis des Differenzialantriebes auf 1 festgelegt werden. Damit ist es möglich, mit dem Differenzialantrieb 5 den kompletten Triebstrang auf die Synchrondrehzahl der Antriebsmaschine 4 zu beschleunigt und diese dann mit dem Netz zu synchronisieren. In weiterer Folge kann der Differenzialantrieb 5 wahlweise weggeschaltet werden und die Antriebsmaschine 4 treibt die Arbeitsmaschine 1 mit Synchrondrehzahl alleine an. Zusätzlich kann der Differenzialantrieb 5 die Arbeitsmaschine 1 parallel zur Antriebsmaschine 4 antreiben, womit eine höhere Triebstranggesamtleistung realisierbar ist. Mit der Differenzialsperre und der Motorbremse 13 kann man somit zwei stationäre Betriebspunkte des Triebstranges realisieren. In einer besonders kostengünstigen Ausführung wird der Differenzialantrieb so leistungsschwach ausgeführt, dass damit nur die Antriebsmaschine 4 mit dem Netz 12, bzw. die Differenzialsperre synchronisiert wird. Dies kann alternativ jedoch auch durch optionales Antreiben des Abtriebes bzw. des ersten Antriebs des Differenzialgetriebes 3 realisiert werden.

Fig. 5 zeigt eine weitere Ausführungsform eines Differenzialsystems mit einem vereinfachten Differenzialantrieb. In dieser Ausführungsvariante wird der netzseitige Wechselrichter 6b durch einen einfachen Gleichrichter 19 ersetzt. Dieser hat einen meist höheren Wirkungsgrad als ein Wechselrichter 6b und ist auch wesentlich robuster und kostengünstiger. Einzige Einschränkung durch den Einsatz eines Gleichrichters 19 ist, dass der Differenzialantrieb 5 nur mehr motorisch (+) betrieben werden kann.

Fig. 6 zeigt die sich aus Fig. 5 ergebenden Drehzahl- und Leistungsparameter bei gleichem Arbeitsdrehzahlbereich für die Antriebswelle 2 wie in Fig. 4 (68%-100%). Aufgrund der Tatsache, dass der Differenzialantrieb 5 nur mehr im motorischen (+) Bereich betrieben wird, ist der maximale Leistungsfluss über den Differenzialantrieb 5 wesentlich größer als im davor gezeigten Beispiel. Im Nennpunkt erreicht die erforderliche Leistung des Differenzialantriebes 5 ("Servoleistung") rd. 500kW, das ist 50% der Gesamtantriebsleistung ("Systemleistung"). Dies hat zur Folge, dass auch der Frequenzumrichter 6a, 19 entsprechend groß dimensioniert werden muss. Vorteil dieser Variante ist, dass das Übersetzungsverhältnis des Differenzialgetriebes 3 wesentlich geringer als für die Variante gemäß Fig. 3 sein kann, und somit beim Anfahren des Systems die dabei maximal erreichbare Drehzahl des Differenzialantriebes 5 geringer ist.

Fig. 7 zeigt eine weitere Ausführungsform eines Differenzialsystems mit einer Getriebeschaltstufe. In dem gezeigten Ausführungsbeispiel wird die Getriebevorstufe 16 um eine weitere Getriebevorstufe 20, mit einem zur Getriebevorstufe 16 verschiedenen Übersetzungsverhältnis, erweitert. Mittels Schaltvorrichtung 21 kann man zwischen den beiden Getriebevorstufen wählen und erhält damit ein Verstellgetriebe 16, 20, 21, welches zwei Drehzahlbereiche für die Antriebswelle 2 realisieren kann. Alternativ können auch mehrere Schaltstufen implementiert werden.

Fig. 8 zeigt die sich aus Fig. 7 ergebenden Drehzahl- und Leistungsparameter. Grundsätzlich enthält die Darstellung zwei Kennfelder - jedes davon ähnlich wie in Fig. 6, jedoch mit jeweils kleinerem Arbeitsdrehzahlbereich für die Arbeitsmaschine 1. Durch das zweistufige Verstellgetriebe 16, 20, 21 sind diese Kennfelder zueinander versetzt, womit bei gleichem Gesamt-Arbeitsdrehzahlbereich für die Pumpe ("Pumpendrehzahl" 68%-100%) eine mit Fig. 6 vergleichbar kleinere Baugröße für den Differenzialantrieb 5 erforderlich ist. Darüber hinaus kann man im Kennfeld mit kleinerer Systemleistung den Differenzialantrieb 5 im Feldschwächebereich betreiben, da hier das für das Differenzialsystem erforderliche Drehmoment grundsätzlich kleiner als dessen Nenndrehmoment ist. Somit ist der Arbeitsdrehzahlbereich im Kennfeld mit der kleineren Systemleistung größer als der für das zweite Kennfeld. Die beiden Kennfelder überlappen sich vorzugsweise im Hysteresebereich "H", um ein häufiges Umschalten zwischen den Kennfeldern zu vermeiden. Der Hysteresebereich "H" geht jedoch zu Lasten eines leistungsmäßig noch kleineren Differenzialsystems und kann, wenn keine Überlappung der beiden Kennfelder erforderlich ist, auch kleiner sein bzw. überhaupt wegfallen.

Fig. 9 zeigt eine erfindungsgemäße Ausführungsform eines Differenzialsystems mit reduziertem Drehzahlbereich. Grundsätzlich ist der Triebstrang gleich aufgebaut wie bereits in Fig. 5 dargestellt. Im Leistungssystem 29 der Arbeitsmaschine 1 ist nach dieser eine Drossel 22 integriert. Damit kann die von der Arbeitsmaschine 1 geförderte Menge gedrosselt werden, ohne dafür die Drehzahl der Arbeitsmaschine 1 zu reduzieren. Diese Drossel 22 wird üblicherweise bei nicht drehzahlvariablen Antrieben eingesetzt, um die geförderte Menge zu regeln/steuern. Die Drossel 22 kann verschiedenste Ausführungsformen haben, wobei eine einfache Klappe eine übliche Variante darstellt.

Grundsätzlich ist auch für die Variante gem. Fig. 9 der zusätzliche Einsatz eines Anpassungsgetriebes 10 möglich. Darüber hinaus kann auch eine Kupplung 15 und eine Synchronisationsbremse 14 zwischen dem zweiten Antrieb bzw. dem Sonnenrad 9 und dem Differenzialantrieb 5 implementiert werden. Weiters ist die Getriebevorstufe 16 auch nicht zwingend notwendig.

Fig. 10 zeigt die sich aus Fig. 9 ergebenden Drehzahl- und Leistungsparameter. Der gewählte Betriebsbereich des Differenzialsystems rückt damit in einen Bereich mit einer hohen Betriebs-Häufigkeitsverteilung ("Wahrscheinlichkeit"). Sobald der Differenzialantrieb 5 bei abnehmender Pumpendrehzahl die Grunddrehzahl (Punkt "T") erreicht, wird dieser vorzugsweise eingebremst bzw. angehalten. Eine betriebstechnisch notwendige geringere Fördermenge wird durch Aktivierung (Regelung/Steuerung) der Drossel 22 realisiert. Dabei bleiben die Drehzahlen des Differenzialsystems im Wesentlichen konstant.

In Fig. 11 ist ein Regelsystem zum Dämpfen von Triebstrangschwingungen dargestellt. Das Drehmoment am Differenzialantrieb 5 ist proportional zum Drehmoment im gesamten Triebstrang, wodurch eine Drehmomentregelung/-steuerung bzw. auch eine Triebstrangdämpfung durch den Differenzialantrieb 5 möglich wird. Unter Triebstrangdämpfung versteht man hierbei das gezielte Ausregeln von rotatorischen Triebstrangschwingungen (Arbeitsmaschienel, Antriebswelle 2, Differenzialgetriebe 3, Antriebsmaschine 4 und Differenzialantrieb 5), die konstant oder transient auftreten können und zu unerwünschten Belastungen im gesamten oder in Teilen des Triebstranges führen. Erreicht wird das durch eine Modulation des Drehmomentes und/oder der Drehzahl des Differenzialantriebes 5 mit Schwingungen gleicher Frequenz.

Derartige, unerwünschte Triebstrangschwingungen oder transiente Triebstrangbelastungen können entweder durch von außen einwirkende Lasten auf die Arbeitsmaschine 1, in der Antriebswelle 2, dem Differenzialgetriebe 3 und dem Differenzialantrieb 5 selbst oder durch die Antriebsmaschine 4 entstehen und werden typischerweise im Drehzahl- bzw. Drehmomentverhalten des Triebstranges sichtbar.

Vorzugsweise können diese durch Drehzahl- und/oder Schwingungsmessungen im Triebstrang oder durch Strommessungen an der Antriebsmaschine 4 und/oder am Differenzialantrieb 5 erfasst werden. Eine direkte Erfassung von Drehmomenten ist ebenfalls möglich, jedoch meist nur aufwändig realisierbar. Die Art der Erfassung hängt aber letztlich immer davon ab, an welcher Stelle im Triebstrang die Dämpfung geschehen soll und ob Kopplungen ausgenutzt werden können.

Werden Triebstrangschwingungen z.B. durch ein typisches Betriebsverhalten an der Arbeitsmaschine 1 verursacht, und sollen sie in ihrer Wirkung an der Antriebsmaschine 4 kompensiert werden, so können diese durch Einprägen gegenphasiger Drehmoment-Schwingungen am Differenzialantrieb 5 verringert oder ausgelöscht werden. Dies ist z.B. bei Kompressoren der Fall, bei denen es bei einer Umdrehung der Kolbenstange zu bauartspezifischen Schwingungsanregungen kommt, welche stark mit der Kolbenstellung korrelieren. Da die jeweilige Schwingungsanregung immer bei derselben Kolbenstellung auftritt, genügt es, die Umfangsposition bzw. Drehstellung z.B. durch Messung zu kennen, um diese kompensieren zu können. Die Kenntnis dieser Schwingungsanregung erlaubt die selektive Kompensation einzelner oder mehrerer Schwingungen gleichzeitig. Vorzugsweise wird dies durch Positionserfassung der Kolbenstange erreicht oder durch eine der oben angeführten Methoden. Die notwendige synchrone und gegenphasige Drehmoment/Drehzahlanpassung wird durch übliche Methoden der Signalverarbeitung vorzugsweise mit Oszillatoren und Notch-Filter-Algorithmen realisiert, welche die gemessene Schwingungsanregung mit den richtigen Frequenzen nachbilden und auswerten. Eingebunden in ein gegengekoppeltes System stellen sich dadurch die notwendigen Amplituden und Phasenlagen für die zur Kompensation erzeugten Schwingungen automatisch ein, mit welchen dann das Stellglied am Differenzialantrieb 5 angesteuert wird.

Wie in Fig. 11 beispielhaft dargestellt ist, werden einer Vergleichsschaltung 30 eine zu erzielende konstante Drehzahl $n_4$ der Antriebsmaschine einerseits und die Drehzahl $n_2$ der Antriebswelle 2 zugeführt. Eine Regeleinrichtung 31 steuert anhand der daraus ermittelten gewünschten Drehzahl $n_{5gewünscht}$ und der tatsächlichen Drehzahl $n_5$ der Eingangswelle des Differenzialantriebs 5 über den Frequenzumrichter 6 den Differenzialantrieb 5 derart, dass Schwingungen der Antriebsmaschine 4 so gut wie möglich bzw. gewünscht gedämpft werden. Die mit Bezug auf Fig. 11 beschriebene Triebstrangdämpfung kann auch unabhängig von allen anderen vorstehend beschriebenen Ausführungsformen eingesetzt werden.

## Patentansprüche

1. Verfahren zum Betreiben eines Triebstranges mit einer Antriebswelle (2), einer mit einem Stromnetz (12) verbundenen, motorisch und generatorisch betreibbaren, elektrischen Antriebsmaschine (4) und mit einem Differenzialgetriebe (3) mit drei An- bzw. Abtrieben, wobei ein Abtrieb mit der Antriebswelle (2), ein Antrieb mit der Antriebsmaschine (4) und ein zweiter Antrieb mit einem nur motorisch betreibbaren, elektrischen Differenzialantrieb (5) verbunden ist, **dadurch gekennzeichnet, dass** der Differenzialantrieb (5) nur motorisch betrieben wird, während die Antriebsmaschine (4) motorisch oder generatorisch betrieben wird, und dass mit der Antriebswelle (2) eine Arbeitsmaschine (1) verbunden ist, die eine Pumpturbine ist.

2. Verfahren nach Anspruch 1, **dadurch gekennzeichnet, dass** ein erster drehzahlstabiler Betriebspunkt bei einer Drehzahl des zweiten Antriebs von Null liegt.

3. Verfahren nach Anspruch 2, **dadurch gekennzeichnet, dass** ein weiterer drehzahlstabiler Betriebspunkt bei einer Drehzahl der Antriebsmaschine (4) liegt, bei der diese mit dem Netz (12) verbunden ist, und dass das Übersetzungsverhältnis des Differenzialgetriebes (3) beim weiteren drehzahlstabilen Betriebspunkt gleich 1 ist.

4. Verfahren nach einem der Ansprüche 1 bis 3, **dadurch gekennzeichnet, dass** mit der Antriebswelle (2) eine Arbeitsmaschine (1) verbunden ist und dass ein Teil der Arbeitsleistung der Arbeitsmaschine (1) durch eine Drossel (22) vernichtet wird.

5. Verfahren nach einem der Ansprüche 1 bis 4, **dadurch gekennzeichnet, dass** der Differenzialantrieb (5) mit einer 87Hz-Kennlinie betrieben werden kann.

6. Verfahren nach einem der Ansprüche 1 bis 5, **dadurch gekennzeichnet, dass** der Differenzialantrieb (5) im Feldschwächebereich betrieben werden kann.

7. Triebstrang mit einer Antriebswelle (2), einer mit einem Stromnetz (12) verbundenen, motorisch und generatorisch betreibbaren, elektrischen Antriebsmaschine (4) und mit einem Differenzialgetriebe (3) mit drei An- bzw. Abtrieben, wobei ein Abtrieb mit der Antriebswelle (2), ein Antrieb mit der Antriebsmaschine (4) und ein zweiter Antrieb mit einem elektrischen Differenzialantrieb (5) verbunden ist, **dadurch gekennzeichnet, dass** der Differenzialantrieb (5) nur motorisch betreibbar und über einen netzseitigen Gleichrichter (19) mit dem Stromnetz (12) verbunden ist, und dass mit der Antriebswelle (2) eine Arbeitsmaschine (1) verbunden ist, die eine Pumpturbine ist.

8. Triebstrang nach Anspruch 7, **dadurch gekennzeichnet, dass** der Differenzialantrieb (5) eine Drehstrommaschine ist.

9. Triebstrang nach einem der Ansprüche 7 oder 8, **dadurch gekennzeichnet, dass** Differenzialantrieb (5) über eine Anpassungsgetriebestufe (10) mit dem zweiten Antrieb verbunden ist.

10. Triebstrang nach einem der Ansprüche 7 bis 9, **dadurch gekennzeichnet, dass** zwischen der Arbeitsmaschine (1) und dem Differenzialgetriebe (3) ein Verstellgetriebe (16, 20, 21) angeordnet ist.

11. Triebstrang nach einem der Ansprüche 7 bis 10 **dadurch gekennzeichnet, dass** mit der Antriebswelle (2) eine Arbeitsmaschine (1) verbunden ist und dass die Arbeitsmaschine (1) eine Fördereinrichtung in einem Leitungssystem (29) ist und dass im Leitungssystem (29) nach der Arbeitsmaschine (1) eine Drossel (22) angeordnet ist.

## Claims

1. Method for operating a drive train with a drive shaft (2), an electrical prime mover (4) that is connected to a power grid (12) and can be motor-operated or generator-operated, and with a differential gear system (3) with three inputs or outputs, one output being connected to the drive shaft (2), one input being connected to the prime mover (4), and a second input being connected to an electrical differential drive (5) that can only be only motor-operated, **characterized in that** the differential drive (5) is only motor-operated, while the prime mover (4) is motor-operated or generator-operated and **in that** a driven machine (1) is connected to the drive shaft (2) the driven machine (1) being a pump turbine.

2. Method according to claim 1, **characterized in that** a first stable-speed operating point is at a speed of the second input of zero.

3. Method according to claim 2, **characterized in that** a further stable-speed operating point is at a speed of the prime mover (4) at which it is connected to the grid (12) and **in that** the transmission ratio of the differential gear system (3) at the further speed-stable operating point is equal to 1.

4. Method according to one of claims 1 to 3, **characterized in that** a driven machine (1) is connected to the drive shaft (2) and **in that** a part of the working power of the driven machine (1) is dissipated by a choke (22).

5. Method according to one of claims 1 to 4, **characterized in that** the differential drive (5) can be operated with an 87-Hz characteristic.

6. Method according to one of claims 1 to 5, **characterized in that** the differential drive (5) can be operated in the field weakening region.

7. Drive train with a drive shaft (2), an electrical prime mover (4) that is connected to a power grid (12) and can be motor-operated or generator-operated, and with a differential gear system (3) with three inputs or outputs, one output being connected to the drive shaft (2), one input being connected to the prime mover (4), and a second input being connected to an electrical differential drive (5), **characterized in that** the differential drive (5) can only be only motor-operated and is connected to the power grid (12) via a grid-side rectifier (19) and **in that** a driven machine (1) is connected to the drive shaft (2) the driven machine (1) being a pump turbine.

8. Drive train according to claim 7, **characterized in that** the differential drive (5) is a three-phase machine.

9. Drive train according to one of claims 7 or 8, **characterized in that** the differential drive (5) is connected to the second input via a matching gear stage (10).

10. Drive train according to one of claims 7 to 9, **characterized in that** there is an adjustable gear system (16, 20, 21) between the driven machine (1) and the differential gear system (3).

11. Drive train according to one of claims 7 to 10, **characterized in that** a driven machine (1) is connected to the drive shaft (2), and **in that** the driven machine (1) is a delivery system in a line system (29), and **in that** in the line system (29), a choke (22) is located after the driven machine (1).

**Revendications**

1. Procédé opérationnel d'une chaîne cinématique pourvue d'un arbre d'entraînement (2), d'une machine d'entraînement (4) électrique, apte à fonctionner par moteur et par générateur, connectée sur un réseau électrique (12) et pourvue d'un différentiel (3) doté de trois entraînements ou prises de force, une prise de force étant reliée avec l'arbre d'entraînement (2), un entraînement étant relié avec la machine d'entraînement (4) et un deuxième entraînement étant relié avec un entraînement différentiel (5) électrique apte à fonctionner uniquement par moteur, caractérisé en ce l'entraînement différentiel (5) ne fonctionne que par moteur, alors que la machine d'entraînement (4) fonctionne par moteur ou par générateur et en ce qu'avec l'arbre d'entraînement (2) est reliée une machine de travail (1) qui est une turbine-pompe.

2. Procédé selon la revendication 1, **caractérisé en ce qu'**un premier point de fonctionnement à vitesse constante se situe à un régime de zéro du deuxième entraînement.

3. Procédé selon la revendication 2, **caractérisé en ce qu'**un autre point de fonctionnement à vitesse constante se situe à un régime de la machine d'entraînement (4) auquel celle-ci est connectée au réseau (12), et **en ce que** le rapport de transmission du différentiel (3) à l'autre point de fonctionnement à vitesse constante est égal à 1.

4. Procédé selon l'une quelconque des revendications 1 à 3, **caractérisé en ce qu'**avec l'arbre d'entraînement (2) est reliée une machine de travail (1) et **en ce qu'**une partie de la performance de la machine de travail (1) est anéantie par un étranglement (22).

5. Procédé selon l'une quelconque des revendications 1 à 4, **caractérisé en ce que** l'entraînement différentiel (5) peut fonctionner avec une courbe caractéristique à 87 Hz.

6. Procédé selon l'une quelconque des revendications 1 à 5, **caractérisé en ce que** l'entraînement différentiel (5) peut fonctionner dans la plage d'affaiblissement du champ.

**7.** Chaîne cinématique pourvue d'un arbre d'entraînement (2), d'une machine d'entraînement (4) électrique, apte à fonctionner par moteur et par générateur, connectée sur un réseau électrique (12) et pourvue d'un différentiel (3) doté de trois entraînements ou prises de force, une prise de force étant reliée avec l'arbre d'entraînement (2), un entraînement étant relié avec la machine d'entraînement (4) et un deuxième entraînement étant relié avec un entraînement différentiel (5) électrique, **caractérisée en ce que** l'entraînement différentiel (5) ne fonctionne que par moteur et est connecté sur le réseau électrique (12) par l'intermédiaire d'un redresseur (19) inhérent au réseau, et **en ce qu'**avec l'arbre d'entraînement (2) est reliée une machine de travail (1) qui est une turbine-pompe.

**8.** Chaîne cinématique selon la revendication 7, **caractérisée en ce que** l'entraînement différentiel (5) est une machine à courant triphasé.

**9.** Chaîne cinématique selon l'une des revendications 7 ou 8, **caractérisée en ce que** l'entraînement différentiel (5) est relié par l'intermédiaire d'un étage réducteur d'adaptation (10) avec le deuxième entraînement.

**10.** Chaîne cinématique selon l'une quelconque des revendications 7 à 9, **caractérisée en ce qu'**entre la machine de travail (1) et le différentiel (3) est placée une transmission variable (16, 20, 21).

**11.** Chaîne cinématique selon l'une quelconque des revendications 7 à 10, **caractérisée en ce qu'**avec l'arbre d'entraînement (2) est reliée une machine de travail (1) et **en ce que** la machine de travail (1) est un système de transport dans un système de ligne (29) et **en ce que** dans le système de ligne (29), un étranglement (22) est placé après la machine de travail (1).

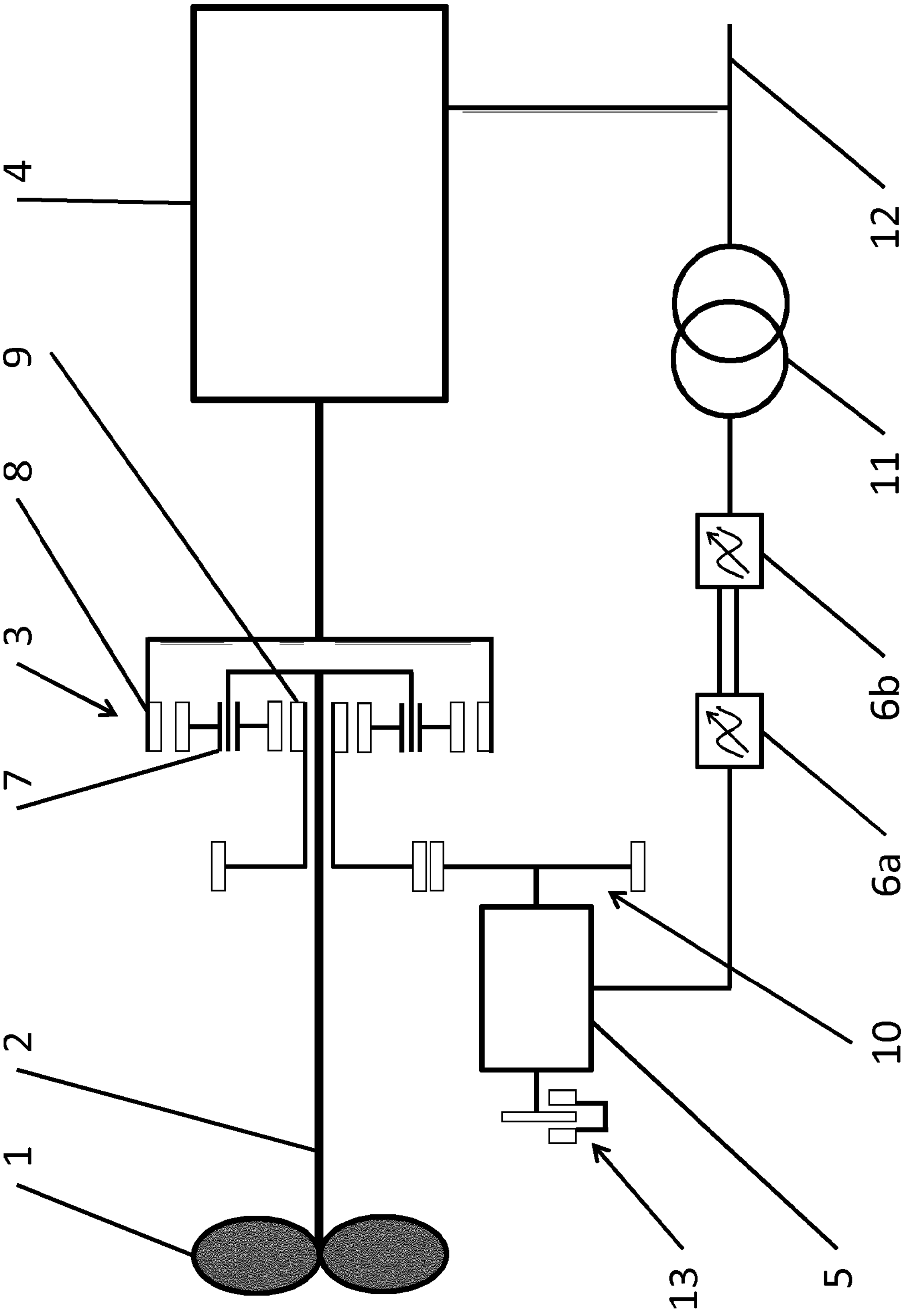


Fig. 1

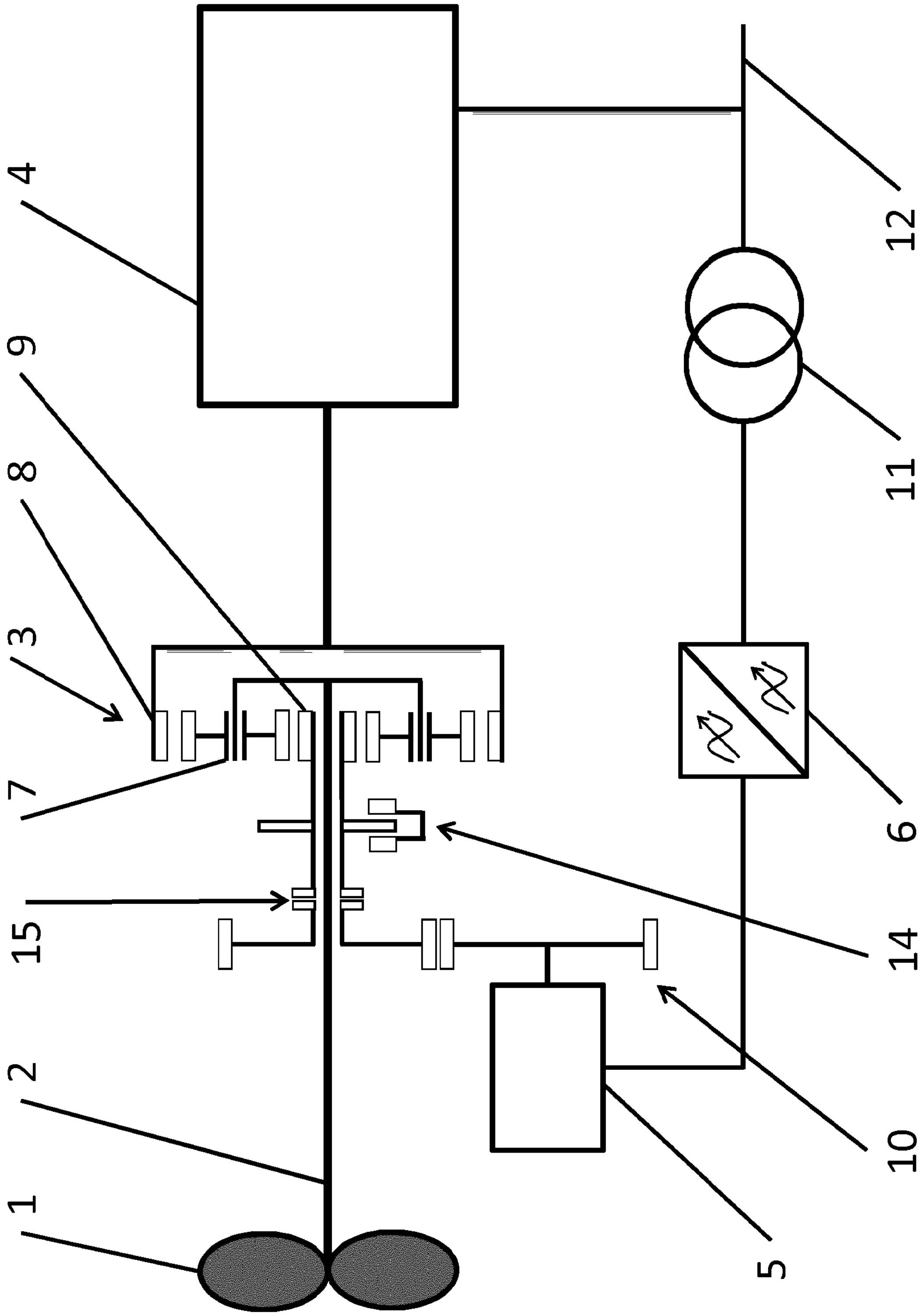


Fig. 2

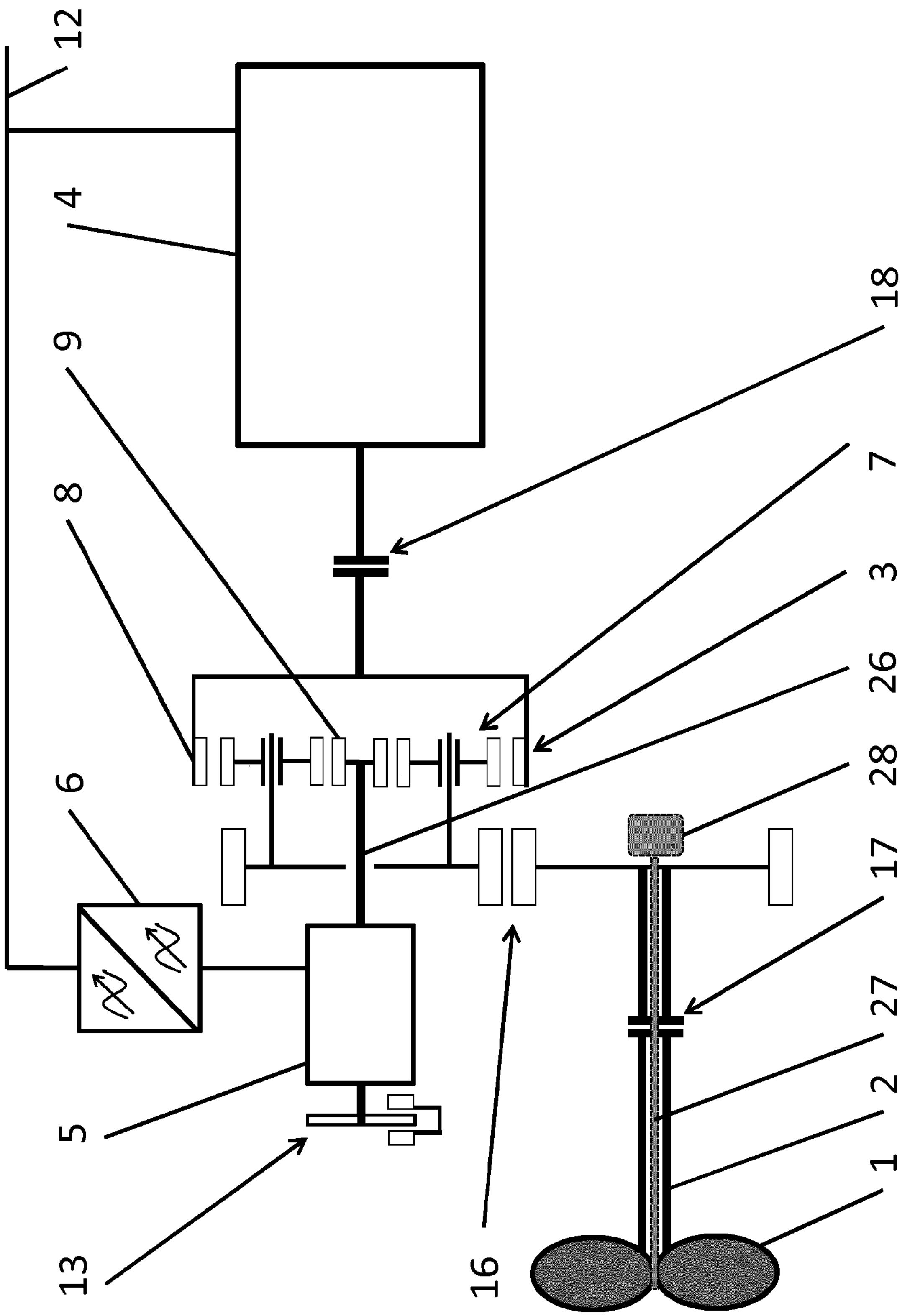


Fig. 3

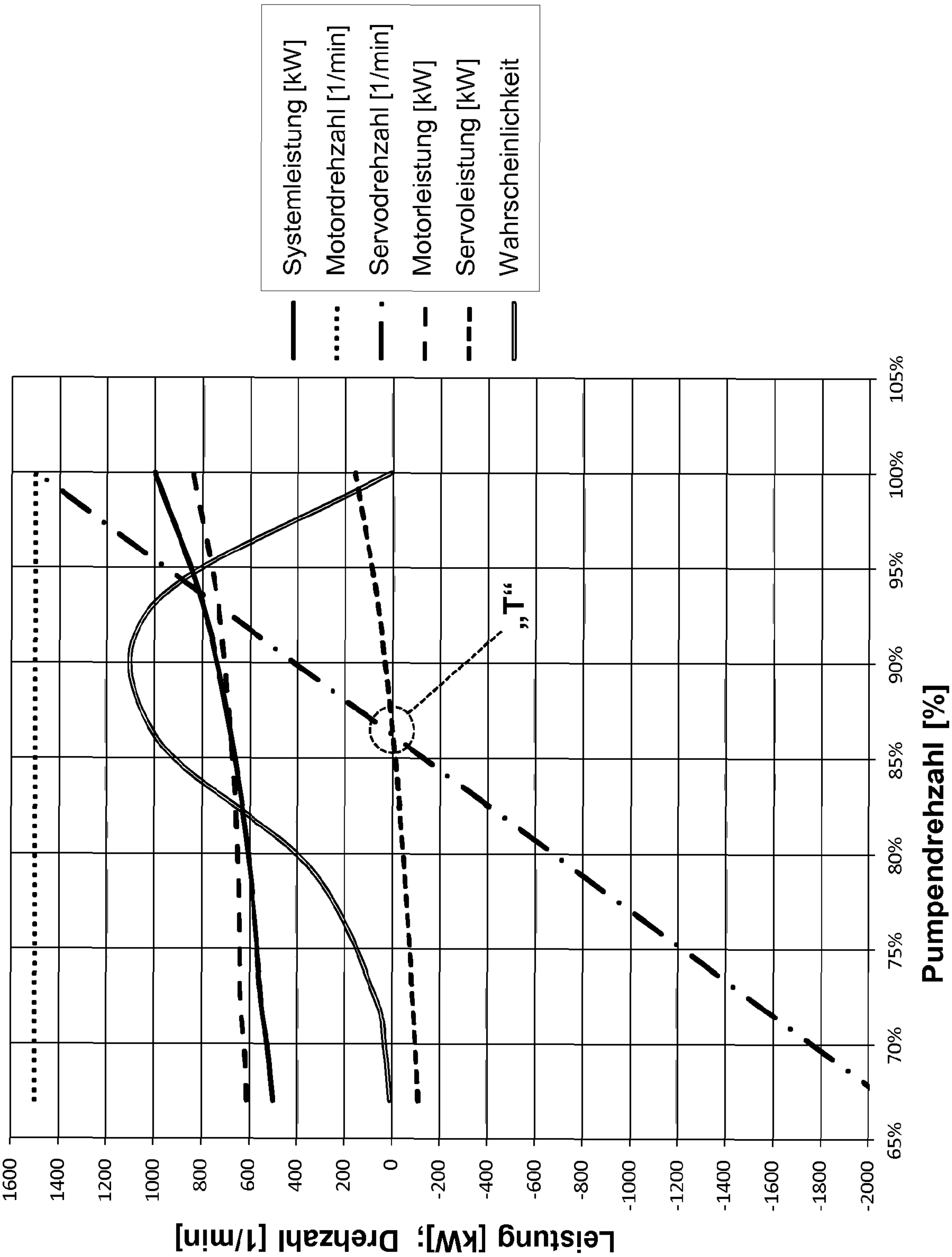

Systemleistung [kW]
Motordrehzahl [1/min]
Servodrehzahl [1/min]
Motorleistung [kW]
Servoleistung [kW]
Wahrscheinlichkeit
„T“
Leistung [kW]; Drehzahl [1/min]
1600
1400
1200
1000
800
600
400
200
0
-200
-400
-600
-800
-1000
-1200
-1400
-1600
-1800
-2000
Pumpendrehzahl [%]
65%
70%
75%
80%
85%
90%
95%
100%
105%


Fig. 4

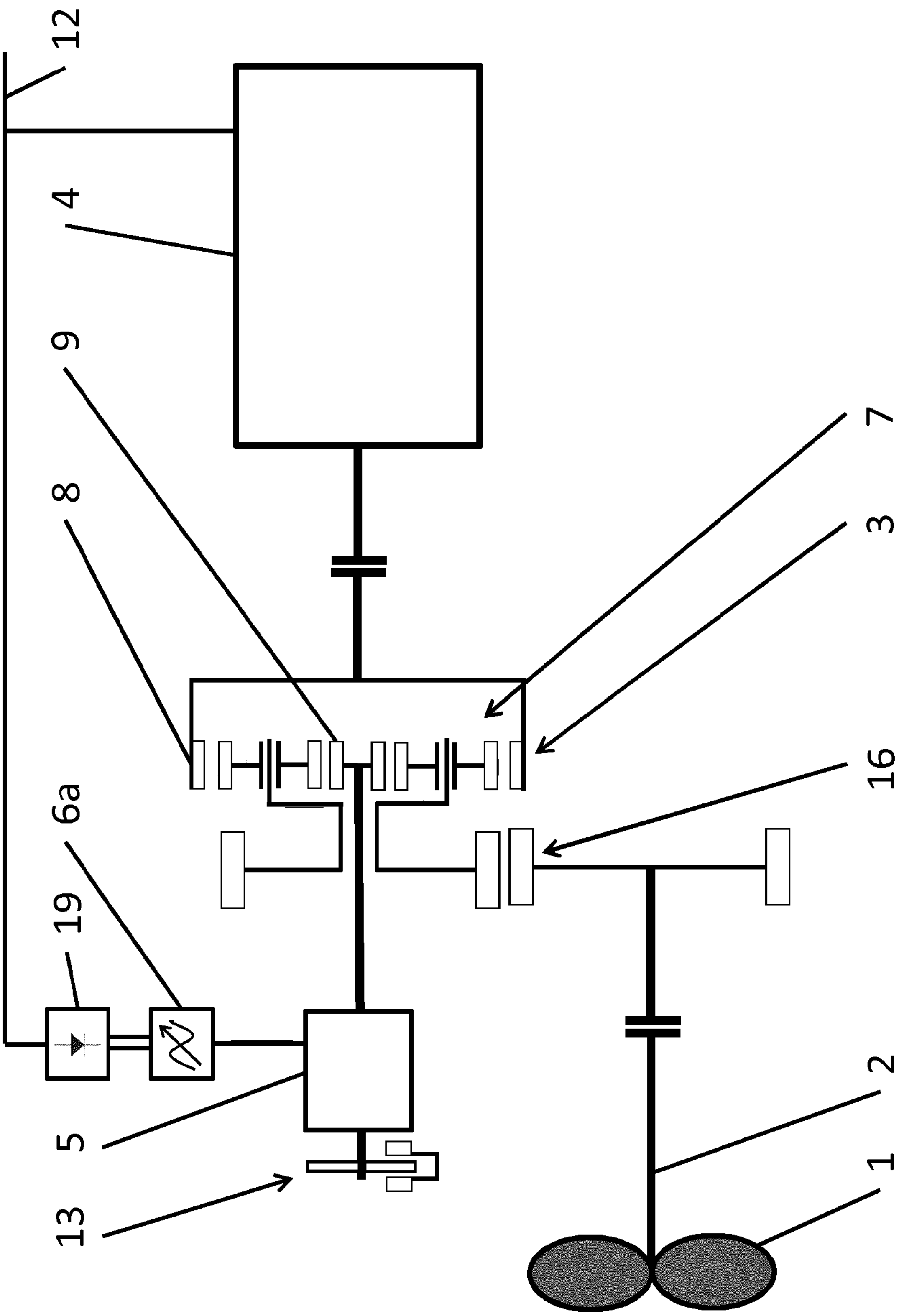


Fig. 5

Fig. 6

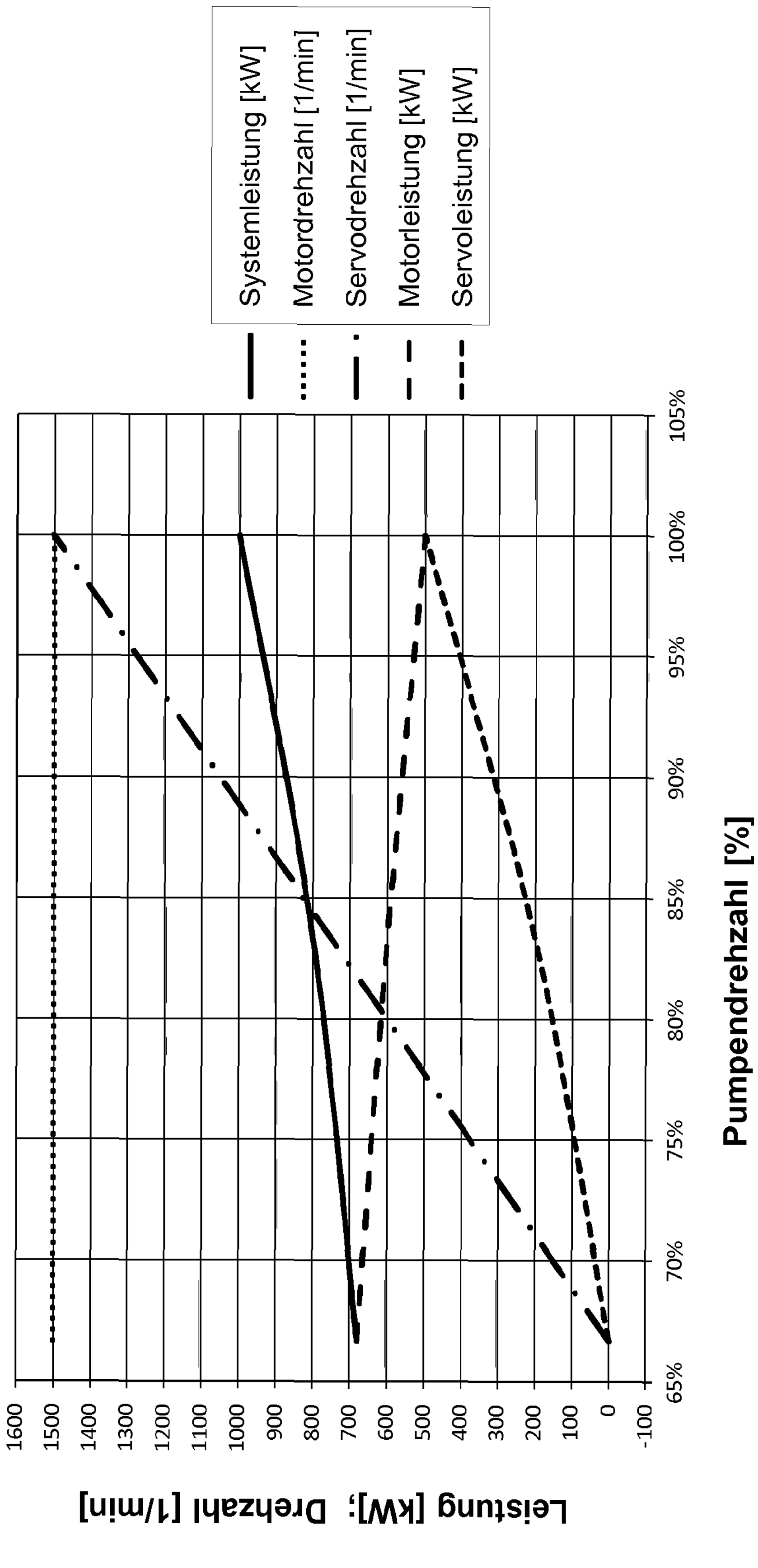
Leistung [kW]; Drehzahl [1/min]
1600
1500
1400
1300
1200
1100
1000
900
800
700
600
500
400
300
200
100
0
-100
65%
70%
75%
80%
85%
90%
95%
100%
105%
Pumpendrehzahl [%]
Systemleistung [kW]
Motordrehzahl [1/min]
Servodrehzahl [1/min]
Motorleistung [kW]
Servoleistung [kW]

Fig. 7

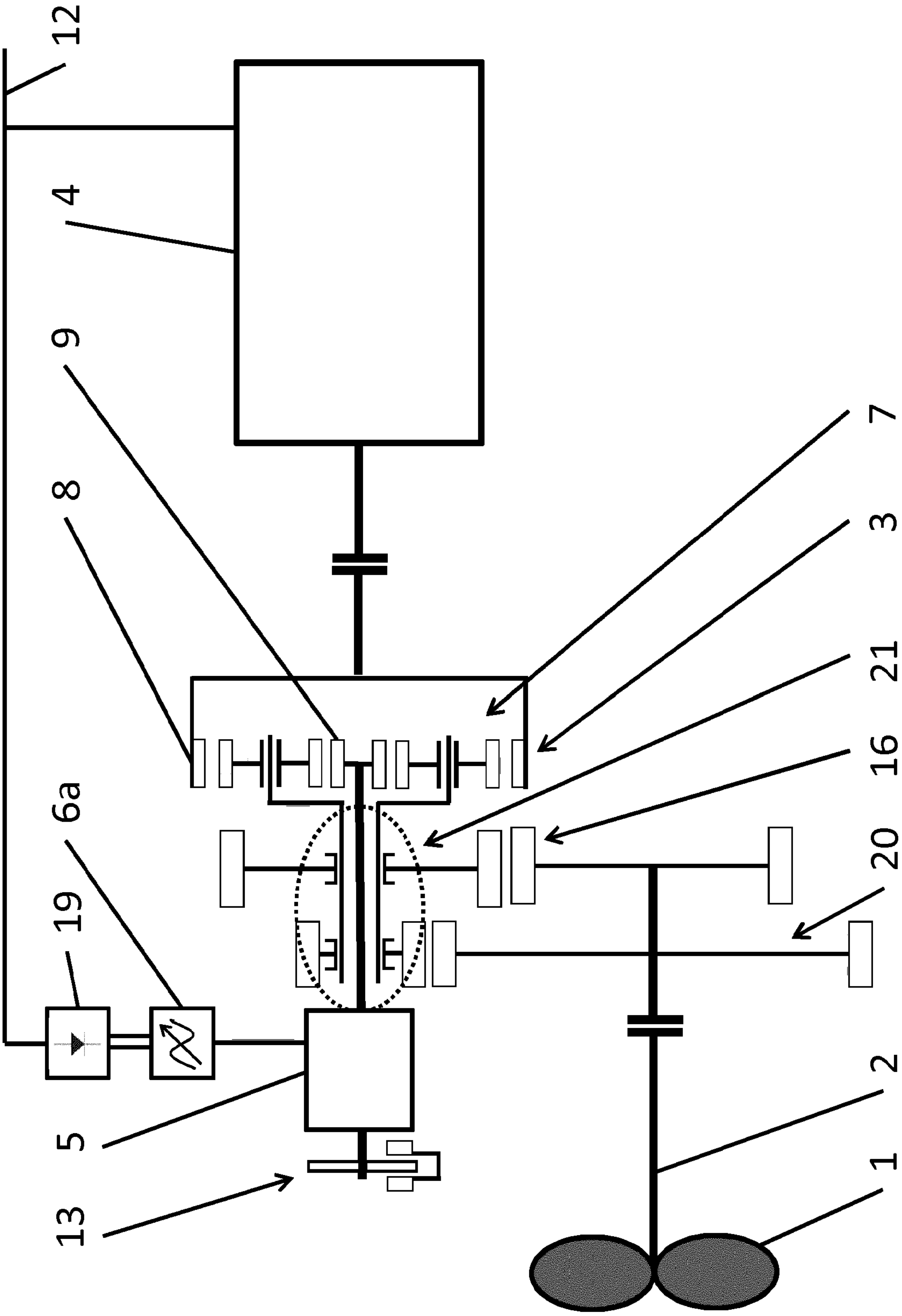

Fig. 8

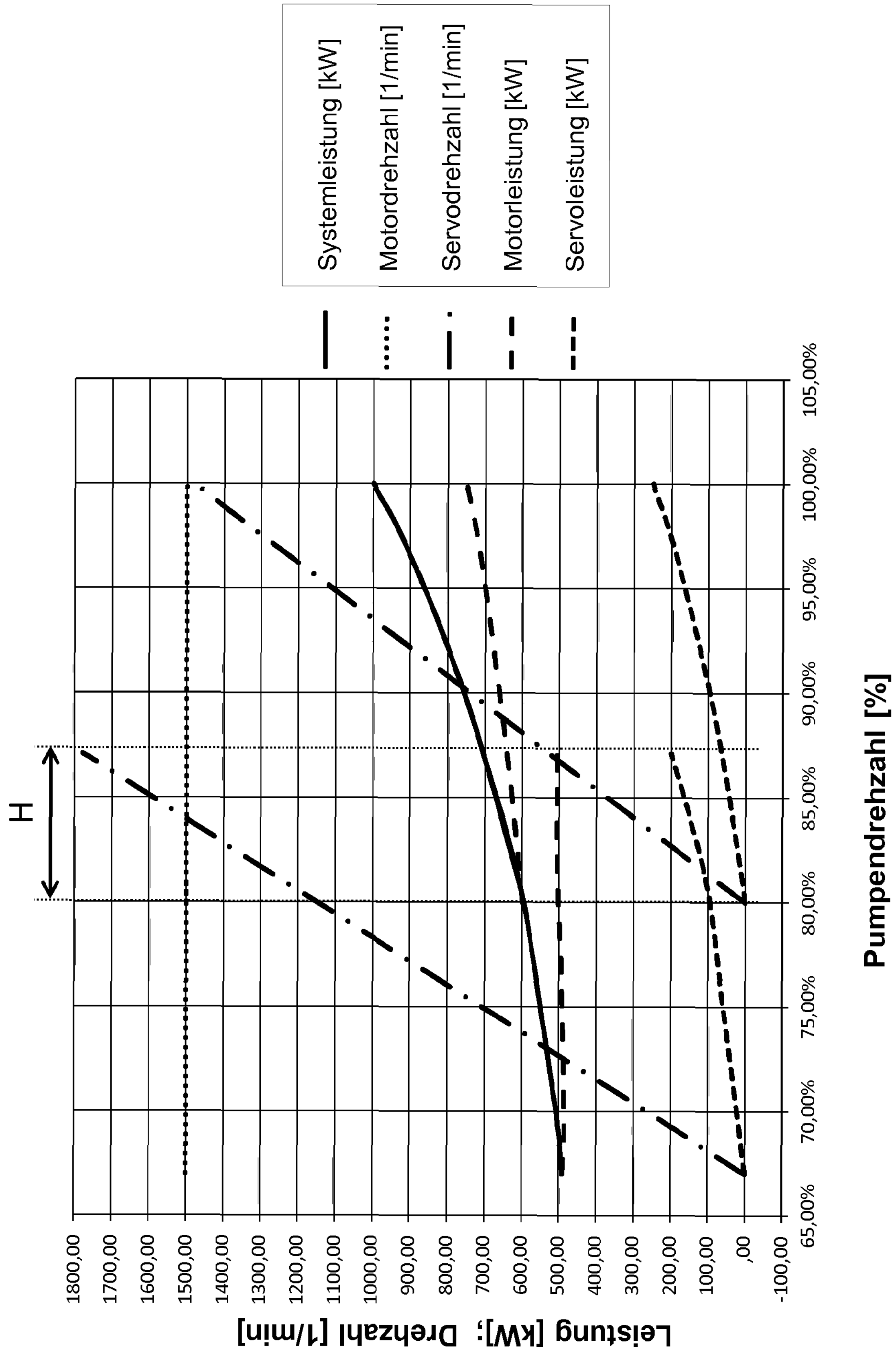
Systemleistung [kW]
Motordrehzahl [1/min]
Servodrehzahl [1/min]
Motorleistung [kW]
Servoleistung [kW]
H
Leistung [kW]; Drehzahl [1/min]
1800,00
1700,00
1600,00
1500,00
1400,00
1300,00
1200,00
1100,00
1000,00
900,00
800,00
700,00
600,00
500,00
400,00
300,00
200,00
100,00
,00
-100,00
65,00%
70,00%
75,00%
80,00%
85,00%
90,00%
95,00%
100,00%
105,00%
Pumpendrehzahl [%]

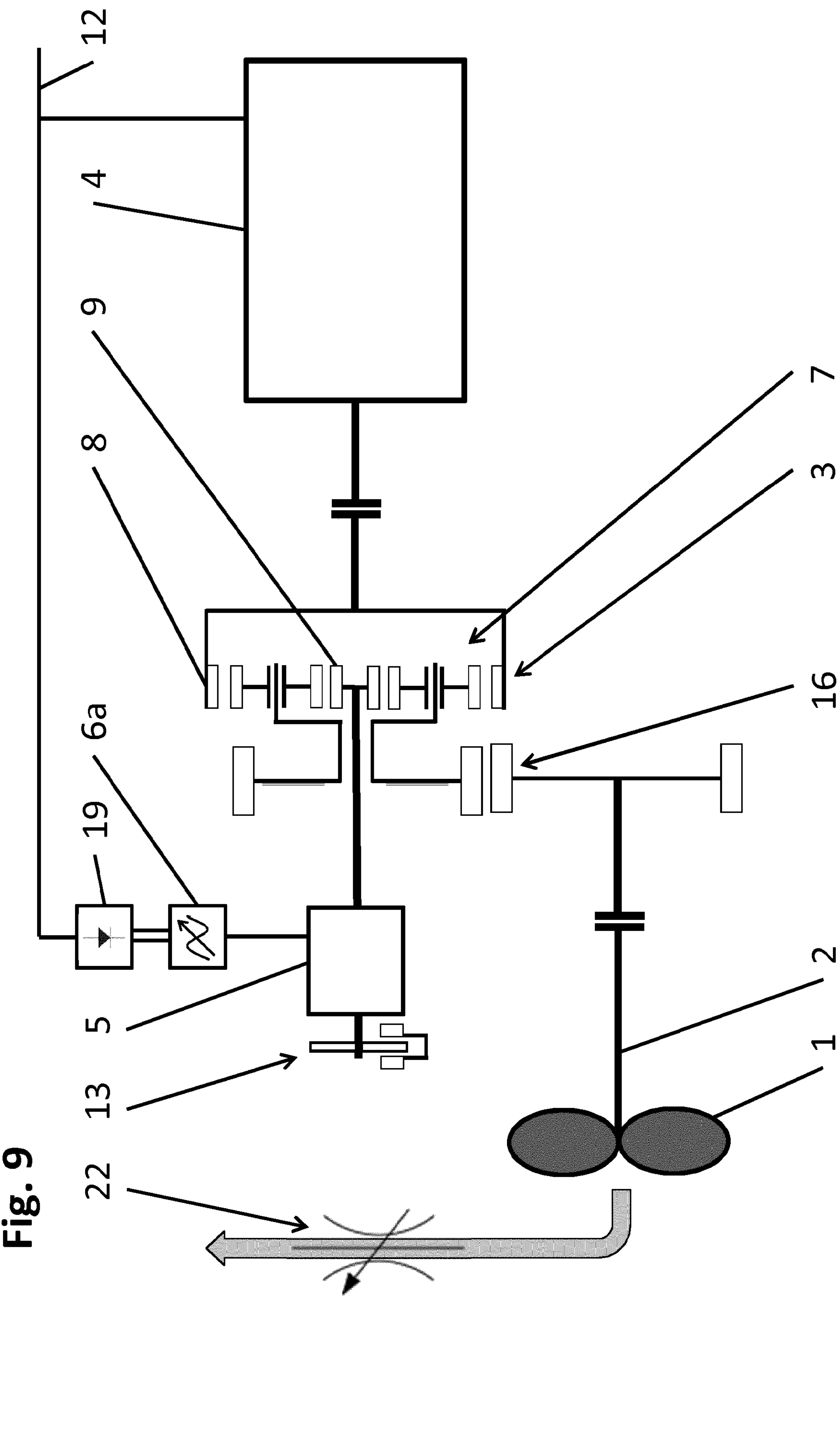


Fig. 9

Fig. 10

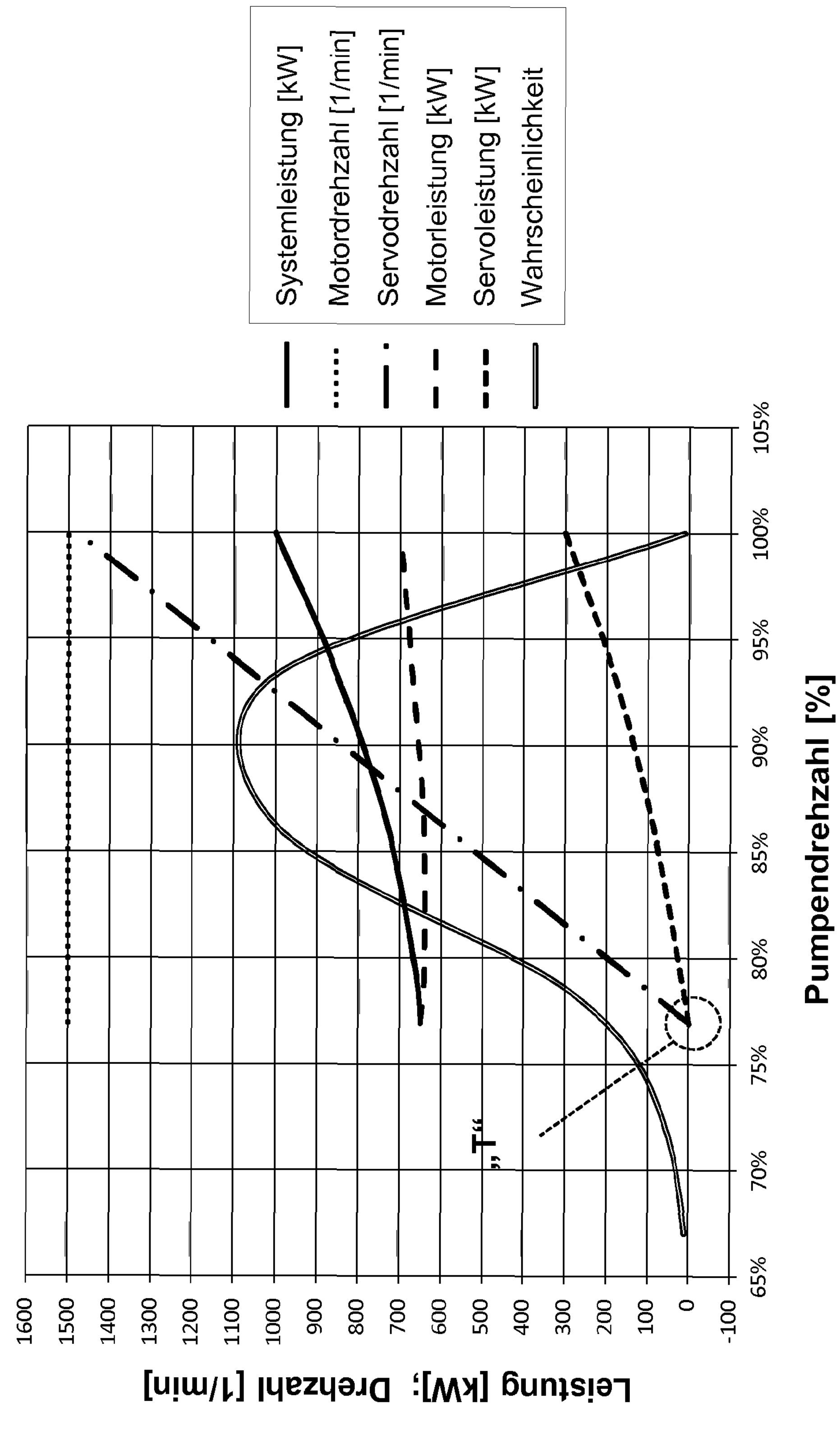
Systemleistung [kW]
Motordrehzahl [1/min]
Servodrehzahl [1/min]
Motorleistung [kW]
Servoleistung [kW]
Wahrscheinlichkeit
„T“
Leistung [kW]; Drehzahl [1/min]
1600
1500
1400
1300
1200
1100
1000
900
800
700
600
500
400
300
200
100
0
-100
65%
70%
75%
80%
85%
90%
95%
100%
105%
Pumpendrehzahl [%]

**Fig. 11**

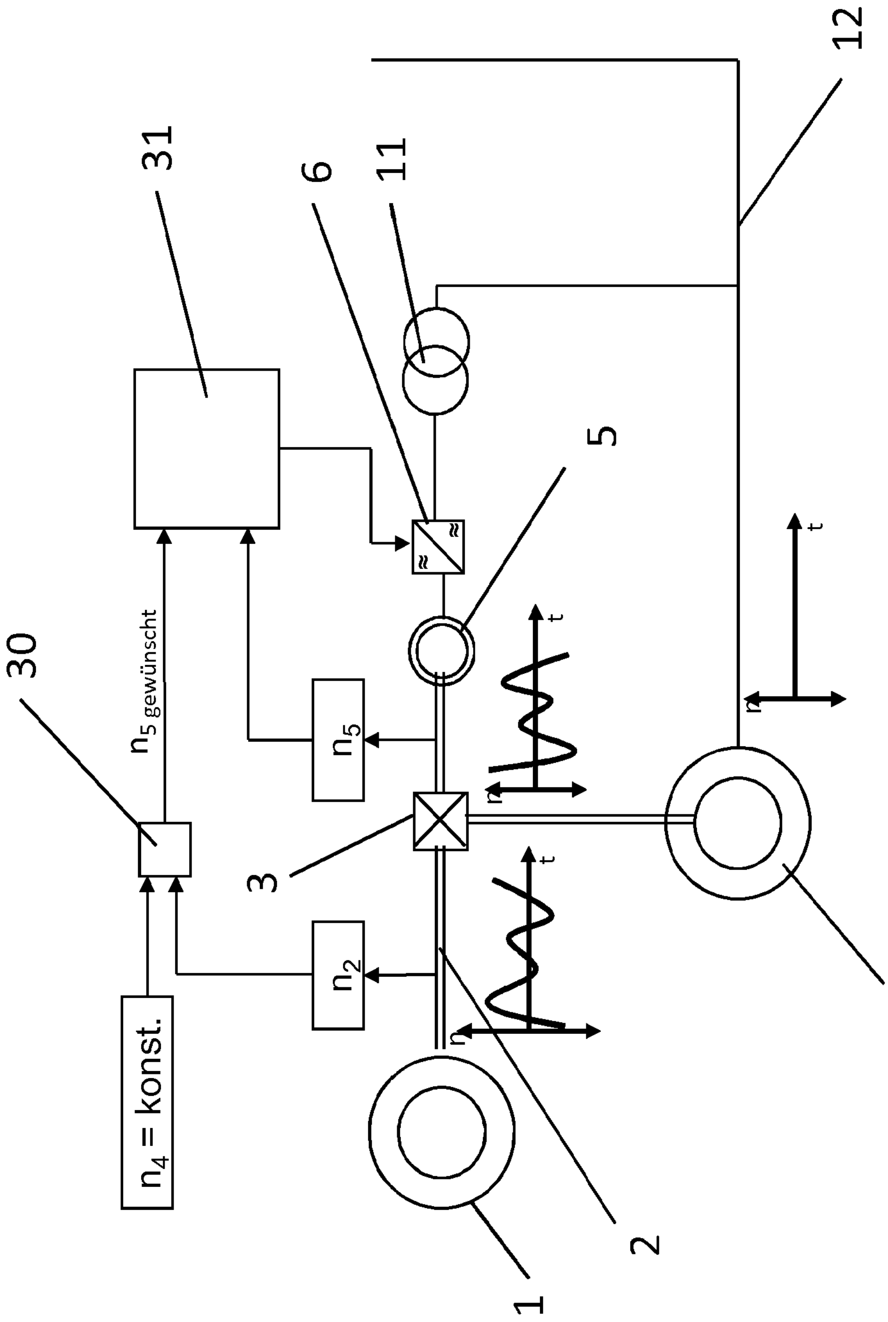

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010101467 A
- AT 507394
- DE 202012101708